# EUROPEAN PATENT APPLICATION

(11) **EP 0 541 147 A1**
(43) Date of publication of application: **12.05.1993**
(21) Application number: 92203232.1
(22) Date of filing: 21.10.1992
(51) Int. Cl.: B60P 7/13, F16B 43/02, B61D 17/04

(54) **Self-regulating bracket to fix refrigerating bodies onto the chassis of the relative means of transport**

(30) Priority: 07.11.1991 IT RE910089 U
(71) Applicant: FURGOCAR - S.r.L., I-42100 Reggio Emilia (IT)
(72) Inventor: Panciroli, Virginio, I-42100 Reggio Emilia (IT); Panciroli, Marco, I-42100 Reggio Emilia (IT)
(74) Representative: Corradini, Corrado

(57) **Abstract**

Bracket to fix isothermal bodies on vehicle chassis where the top of the chassis has horizontal reinforcing bands or flanges (40) to support and fix the base (5) of the body, it comprises a "U"-shaped piece (1) whose crosspiece (10) has a bolt (6) passing through it, with the possibility of reciprocal oscillation, to screw into the base, and whose arms (12), (13) are associated respectively with self-adjusting shoes (2), (3) that will stand respectively on the flange (40) and on the base (5).

## Description

This invention relates in an entirely general manner to isothermal wagons or bodies and, more in particular, to a device to fix these wagons or bodies onto the chassis of the relative means of transport or trailer.

As is well-known, these isothermal bodies consist of a parallelepiped shell formed by insulated walls that is made separately to then be fixed onto the chassis of a vehicle, such as a lorry.

This is done through the base of the body that is suitably prepared to subsequently be fixed to the chassis beneath it.

In particular, the top of the chassis comprises a network of girders that have horizontal reinforcing bands or flanges. For example, these girders consist of structural steel with an "I" shaped cross-section, the top and bottom flanges of which are used to fix the body.

Likewise, the thickness of these flanges may vary quite considerably from one chassis to another; this is for several reasons, for example it depends on the maximum admitted carrying capacity. Moreover, these flanges do not always have a constant thickness; it can decrease from where it is attached going out to its free edges.

There is, therefore, the problem of fixing refrigerating bodies onto the relative chassis in a proper and easy manner.

For this fixture, and according to a first technical note, known brackets are basically composed of a long flat piece that has been bent transversely in the two opposing directions so that it takes on a step shape.

One of the flat parts of these brackets will be in contact with one of the chassis girders, while the opposing flat part will have a hole for a bolt to pass through to screw into the corresponding threaded hole that has been made in the base of the isothermal body.

According to the above technical note, different brackets are made for the different thicknesses of the flanges of the chassis that will be used. This causes production, storage, and distribution problems for the manufacturer, besides supply, storage, and usage problems for the user.

It is worthwhile pointing out that, as has already occurred, a user having different types of bracket might use unsuitable brackets, i.e. the wrong bracket for the thickness of the flanges used to fix the body.

In this kind of situation, the bracket is at an angle, so its drilled flat part is not on a level with the body base, with the outcome that the tightening force is unevenly distributed on the corresponding area of the base, therefore, subjecting it to disadvantageous differentiated forces.

It is worthwhile pointing out that this uneven distribution of the tightening force also occurs when a bracket with the right step for the thickness of the flange is used, but the flange does not have a constant thickness as mentioned above.

According to another technical note, only one type of bracket is made and it is combined with plates of differing thicknesses to be placed between the drilled flat part of the bracket and the bottom of the body depending on the thickness of the girder flanges that will be used for fixing.

However, this known solution basically has the same problems connected with the first one mentioned above.

One aim of this invention is to produce a bracket to fix isothermal bodies onto chassis in general. Such a bracket may be defined as universal as it has the object of making a proper fixture regardless of the thickness of the attachment flange and whether this thickness is constant or not.

Another aim of this invention is to make a self-adjusting bracket to ensure uniform and homogeneous distribution of the tightening force on the corresponding area of the body. These aims are achieved in the context of a simple and rational construction solution.

According to the invention, the proposed bracket comprises a "U" shaped piece whose crosspiece has a through bolt to screw into the body base, and at the ends of whose arms there are two self-adjusting shoes that will press respectively on one flange of the chassis girder and on the body base.

In particular, the bolt through the crosspiece has a certain clearance to enable the latter to fit in conformity with the position taken on by the shoes on the areas where they stand (girder flange, body base).

Moreover, the arm of the "U" piece destined to be arranged by the part of the body attachment flange is preferably shorter than the opposite arm.

Thanks to the above described means, all the aims of the invention are achieved.

In fact, thanks to the clearance between the bolt and the crosspiece, and thanks to the couplings between the shoes and the arms, the shoes arrange themselves perfectly on a level with the relative bearing surface so the bracket tightening force is distributed evenly.

Furthermore, thanks to the same means, the bracket at issue produces the even distribution mentioned above no matter what the thickness of the chassis girder flange.

Lastly, the shorter arm enables the "U" piece crosspiece to arrange itself basically at right-angles to its fixing bolt even when the bracket is coupled with flanges of relatively different thicknesses.

The construction features and characteristics of the invention will be clear from the following detailed description that refers to the enclosed figures, where:
FIG.1 illustrates the invention with a cross-sectional view and in a particular usage configuration;
FIGS.2, 3 and 4 are the sections respectively marked II-II, III-III and IV-IV in FIG.1.

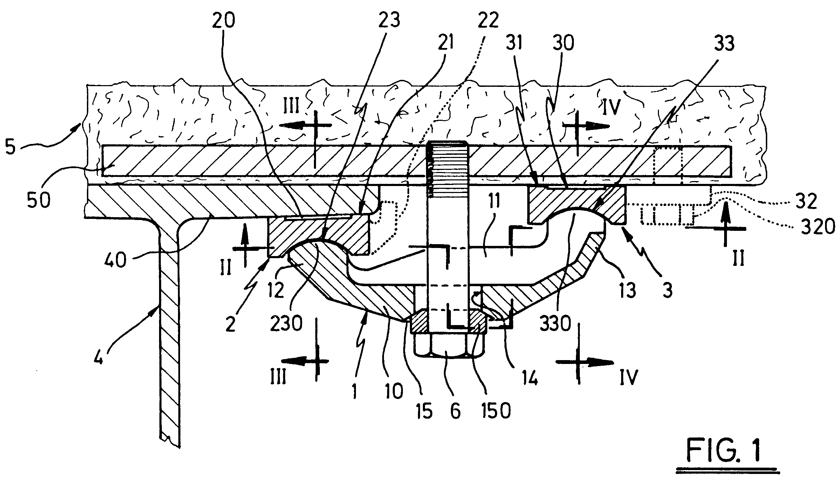

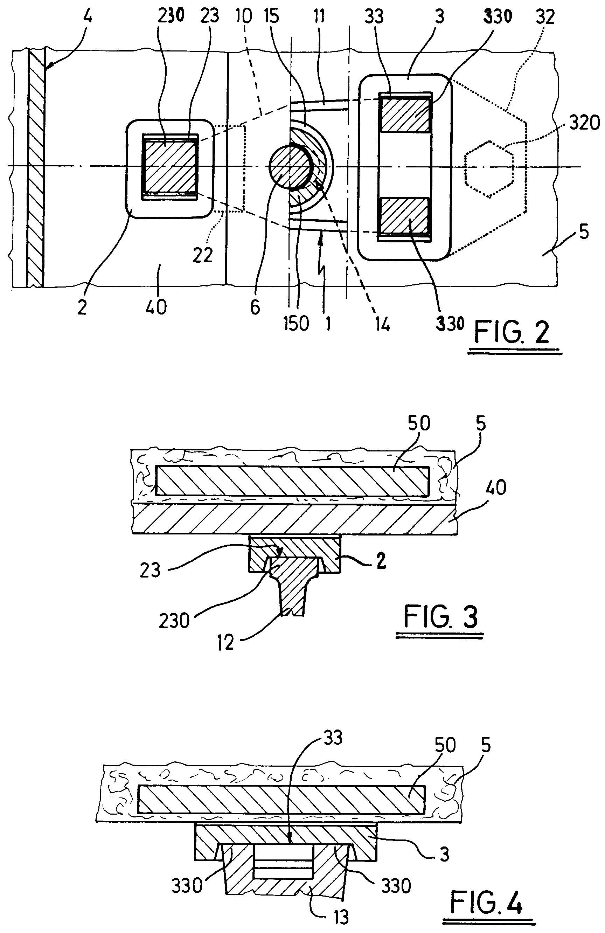

Considering in particular figures 1 and 2, there is a fork-shaped piece, or rather a "U"-shaped piece, whose crosspiece 10 is strengthened by two opposing longitudinal ribs 11 situated towards the concave part of the "U"-shape.

The latter's arms 12 and 13 have different lengths, and the arms are associated with self-levelling and self-adjusting shoes 2 and 3 that will be considered later on.

FIG.1 shows a girder 4, with an "I"-shaped cross-section, that belongs to the chassis of a vehicle such as a lorry. In the same figure, the number 5 indicates the refrigerating body base to be fixed to the lorry by means of a suitable series of brackets conforming to the invention.

Reference number 40 indicates the flange of the girder 4 destined to be associated with the invention. Number 50 indicates strengthening built into the base 5 prepared for fixing the bracket.

This is by means of a through bolt 6 that passes through the middle of the crosspiece 10 to screw into a corresponding hole in the strengthening 50 described above.

As shown in figures 1 and 2, this bolt 6 has a certain clearance through the crosspiece 10. The latter has a slot 14 with a slightly larger width than the outer diameter of the bolt 6, and whose length is restricted to the surface of the lie of the "U"-shaped piece.

In other words, the length of slot 14 is parallel to the longitudinal axis of crosspiece 10.

The opening of slot 14 which is turned toward the head of bolt 6 leads into an impression 15 that has the shape of a spherical cap.

Moreover, there is a ring 150 between the crosspiece 10 and the head of bolt 6. The opposite sides of ring 150 are singly composed of a flat surface in the shape of a circular crown, and made to go against said head, and of a curved surface, shaped like part of a spherical surface, to come into contact with cap 15.

This enables the "U"-piece 1 to oscillate in its lie with respect to bolt 6, as is perfectly understandable from FIG.1, so that the thickness of flange 40 has virtually no importance at all.

At this stage it should be pointed out that the shorter arm of the cap, indicated by 12 in the figure, is the one destined to hook the cap onto flange 40 with shoe 2 in between.

The latter, see FIGS.1, 2 and 3, consists of a plate-shaped piece whose surface toward flange 40 is slightly sunken in the centre.

The flat frame enveloping this hollow 20 is fitted with a non-slip knurl 21.

As indicated by the dotted lines in FIG.1, around the rim of this frame turned towards the bolt 6 there may be a shoulder 22 to contact the free longitudinal rim of flange 40.

On the face of shoe 2, opposite the knurled surface, there is a cradle impression, indicated by 23, which is composed of a portion of a cylindrical surface.

The latter's generators are positioned orthogonal to the plane of the lie of the "U"-piece 1, and the same impression 23 is confined by two transversal walls indicated by 24 in FIG.3.

Lastly, this impression 23 is there to take the conjugate end 230 of arm 12.

It is worthwhile pointing out that, thanks to the above described coupling, shoe 2 can take on the same lie as the bearing surface of flange 40 as the shoe can correspondingly oscillate with respect to arm 12 of the "U"-piece 1 (FIG.1).

The latter In its turn can oscillate, as mentioned above, in relation to the thickness of flange 40, and this concurring with the coupling between it and shoe 3 opposite.

The latter, see FIGS. 1,2 and 4, consists of a plate-shaped piece completely like the one forming shoe 2 described above. As indicated by the dotted lines in FIG.1, for a matter of practicality this plate-shaped piece may have a drilled appendix 32 for the bolt 320 to fix shoe 3 to the strengthening 50.

The bearing face of shoe 3 has a central hollow 30 against the base 5, and the flat frame that envelops this hollow has a non-slip knurl 31. Lastly, the face opposite shoe 3 has an impression or cradle, indicated by 33 and having the same characteristics as impression 23 associated with shoe 2, which is coupled with the conjugate side 330 of arm 13 of "U"-piece 1.

More precisely, this conjugate side 330 is made available by the two ribs 11, in particular by their ends that project beyond the end of arm 13 (FIGS. 1, 2, 4). Lastly (see FIGS. 3, 4), although the areas of mutual contact between the arms (12, 13) and the shoes (2 and 3 respectively) are basically the same, the width of the bearing surface of arm 13 on shoe 3 is greater than the width of the bearing surface of arm 12 on shoe 2. This, in combination with the above described characteristics, makes it possible to distribute the tightening force of bolt 6 homogeneously on base 5.

In other words, the force with which arm 13 acts against shoe 3 is discharged onto two areas that are distinct and/or distant from shoe 3 thus ensuring the homogeneous distribution mentioned above.

Finally, it is worthwhile pointing out (FIGS. 3 and 4) that the end of the crosspiece 10 at the top of arm 12 is tapered transversely for the reasons given above.

The merits and advantages of the invention, and of its use, are clearly understandable from the above and from an examination of the enclosed figures.

## Claims

1. Bracket to fix isothermal bodies on vehicle chassis where the top of the chassis has horizontal reinforcing bands or flanges (40) to support and fix the base (5) of the body, characterised by the fact that it comprises a "U"-shaped piece (1) whose crosspiece (10) has a bolt (6) passing through it, with the possibility of reciprocal oscillation, to screw into the base, and whose arms (12), (13) are associated respectively with self-adjusting shoes (2), (3) that will stand respectively on the flange (40) and on the base (5).

2. Bracket according to claim 1, characterised by the fact that the reciprocal oscillation mentioned above is transferred to a slot (14) in the centre of the crosspiece and its length is parallel to the latter's longitudinal axis. This slot (14) leads, from the side fitted for the head of the bolt (6), into an impression (15) with the shape of a spherical cap.

3. Bracket according to claim 1, characterised by the fact that between the head of the bolt (6) and the crosspiece (10) there is a ring (150) whose opposite sides are formed by surfaces with shapes conjugate to those of the head and cap (15).

4. Bracket according to claim 1, characterised by the fact that the arm (2) of the piece the shoe (2) is associated with and which is destined to come into contact with flange (40) has a shorter length than that of the opposite arm (3).

5. Bracket according to claim 1, characterised by the fact that the self-adjusting shoes (2) and (3) respectively are singly equipped with at least one impression (23), (33) shaped like a portion of a cylindrical surface with its generators transversal to the plane the "U"-piece lies in, and by the fact that the ends (230), (330) of the arms (12), (13) have a shape conjugate with that of the impressions which have transverse walls (24) to check the ends (230), (330).

6. Bracket according to claims 1 and 5, characterised by the fact that the arm (13) bears on the shoe (3), to be tightened against the base (5), in several distinct areas of the shoe (3).

7. Bracket according to claims 1, 4, 5, and 6, characterised by the fact that the bearing faces of the shoes (2) and (3) are, at least partially, fitted with a non-slip knurl (21), (31).

8. Bracket according to claims 1, 4, 5, 6 and 7, characterised by the fact that the shoe (2) to come into contact with flange (40) is fitted with a shoulder (22) to check the free longitudinal edge of the flange (40).

9. Bracket according to claims 1, 5, 6, and 7, characterised by the fact that the shoe (3) to come into contact with the base (5) has a drilled appendix (32) for a bolt (320) to pass through to fix shoe (3) to the base (5).

10. Bracket according to claims 1 and 2, characterised by the fact that on the internal face of the crosspiece (10) there are two longitudinal strengthening ribs (11) that are on both sides of the slot (14).

11. Bracket according to claims 1, 4, 5, and 10, characterised by the fact that the shaped part (330) of the arm (13) to couple with impression (33) of the respective shoe (3) is composed of the corresponding ends (330) of the ribs (11) whose ends (330) project beyond the end of the arm (13).
